# EUROPÄISCHE PATENTSCHRIFT

(11) **EP 3 602 533 B1**
(45) Veröffentlichungstag und Bekanntmachung des Hinweises auf die Patenterteilung: **26.07.2023**
(21) Anmeldenummer: 18714205.4
(22) Anmeldetag: 23.03.2018
(51) Int. Cl.: G09F 13/18, G09F 13/04, F21V 8/00

(54) **LEUCHTKÖRPER**
ILLUMINANT
CORPS D'ÉCLAIRAGE

(30) Priorität: 29.03.2017 DE 102017003036
(43) Veröffentlichungstag der Anmeldung: 05.02.2020
(73) Patentinhaber: Singulus Technologies AG, 63796 Kahl am Main (DE)
(72) Erfinder: KRUSE, Kilian, 63500 Seligenstadt (DE)
(74) Vertreter: Vossius & Partner Patentanwälte Rechtsanwälte mbB
(86) Internationale Anmeldenummer: PCT/EP2018/057407
(87) Internationale Veröffentlichungsnummer: WO 2018/177911

(56) Entgegenhaltungen:
- WO-A1-2008/090507
- DE-A1- 10 114 588
- FR-A1- 2 908 502
- US-A1- 2008 066 355
- US-A1- 2014 340 897

## Beschreibung

Die vorliegende Erfindung betrifft einen Leuchtkörper mit einer metallisch glänzenden Oberfläche sowie ein Verfahren zur Herstellung eines solchen Leuchtkörpers.

In den unterschiedlichsten Anwendungsgebieten werden verschiedene Leuchtkörper verwendet, um im Dunkeln Informationen anzuzeigen oder Strukturen mittels Licht kenntlich zu machen. In vielen Fällen ist jedoch eine permanente Anzeige bzw. Kenntlichmachung nicht erforderlich oder nicht erwünscht (beispielsweise unter Tageslichtbedingungen). Jedoch sind dann die Mittel, mit denen die leuchtende Information angezeigt wird, in der Regel noch immer sichtbar bzw. erkennbar, was zu einer Beeinträchtigung der Funktion des entsprechenden Produkts führen kann und/oder einen nachteiligen Effekt auf die Ästhetik/ Erscheinung haben kann.

So offenbaren beispielsweise die DE 101 14 588 A1 sowie die DE 201 05 140 U1 ein hinterleuchtetes Kunststoffteil für Anzeige- und/oder Funktionseinstellelemente, das aus durchsichtigem Kunststoff besteht und mit einer dünnen Metallschicht bedampft ist, wobei ein oder mehrere punktuelle oder flächenausleuchtende Beleuchtungskörper hinter dem oder in dem Kunststoff vorgesehen sind, sodass durch die Metallschicht diffuses Licht vorderseitig austritt. In die Metallschicht können Anzeigesymbole in einer andersfarbigen Beschichtung oder laserstrukturiert oder in Drucktechnik auf bzw. eingebracht sein, die sich durch die Hinterleuchtung von der Metallbeschichtung abheben. Derartige Anzeigesymbole sind jedoch unter Tageslichtbedingungen sichtbar, sodass für den Betrachter oder Verwender des hinterleuchteten Kunststoffteils kein homogener Eindruck der Metallschicht entsteht.

Die DE 10 2015 208 981 A1 beschreibt ein Element für eine Leuchte, das einen Grundkörper hat, der zumindest abschnittsweise eine Beschichtung aufweist, die eine zum Grundkörper weisende innere Schichtseite und eine vom Grundkörper wegweisende äußere Schichtseite aufweist. Der Grundkörper ist transparent und die Beschichtung mit Licht von der inneren Schichtseite her durchstrahlbar. Von der äußeren Schichtseite her ist die Beschichtung zumindest teilweise reflektierend und reflektiert bevorzugt metallisch und/oder glänzend. In diesem Fall wird das mittels Licht hervorgehobene Muster durch die Gesamtstruktur des Grundkörpers gebildet, sodass dieses Muster auch ohne Beleuchtung erkennbar bleibt.

Die DE 10 2004 060 453 A1 beschreibt ein mehrschichtiges flächiges Kunststoffteil für dekorative Elemente und/oder Funktionselemente aus einem transparenten Trägerteil mit aufgebrachten Schichten. Auf einer ersten Seite des Trägerteils ist mindestens in Teilbereichen eine optisch wirksame Schicht aufgebracht, der eine Blende zugeordnet ist, die die Lichtdurchlässigkeit in Teilbereichen verhindert und die mit einer Lichtquelle hinterleuchtbar ist. In die optisch wirksame Schicht können Strukturen eingebracht sein, wodurch sich flächenbezogen unterschiedliche Lichttransmissionseigenschaften der Schicht ergeben. Auch hier ist jedoch die optisch wirksame Schicht durch das transparente Trägerteil sichtbar, sodass diese Strukturen auch ohne Hinterleuchtung sichtbar bleiben.

Auch die DE 10 2006 044 813 A1 beschreibt ein beleuchtbares Bauteil. In der DE 10 2015 212 885 A1 sowie der EP 3 115 851 A1 ist ein Verfahren zur Herstellung eines Hologramms beschrieben.

Es ist daher eine Aufgabe der vorliegenden Erfindung, einen verbesserten Leuchtkörper sowie ein verbessertes Verfahren zur Herstellung eines Leuchtkörpers bereitzustellen, der bzw. das den oben beschriebenen Nachteilen Rechnung trägt. Es ist insbesondere eine Aufgabe der vorliegenden Erfindung, einen Leuchtkörper (sowie ein Verfahren zu dessen Herstellung) bereitzustellen, mit dem sich auf einfache Weise Informationen und/oder Muster aus Licht erzeugen können und der unter Tageslichtbedingungen optisch homogen und ansprechend erscheint.

Diese Aufgabe wird mit einem Leuchtkörper gemäß Anspruch 1 und einem Verfahren zur Herstellung eines Leuchtkörpers gemäß Anspruch 13 gelöst.

Dementsprechend betrifft die vorliegende Erfindung einen Leuchtkörper mit einer transparenten Substratschicht mit einem ersten Brechungsindex, einer Verbindungsschicht mit einem zweiten Brechungsindex, der sich vom ersten Brechungsindex unterscheidet, und einer metallischen, lichtdurchlässigen Schicht. Die Verbindungsschicht ist zwischen der Substratschicht und der metallischen Schicht angeordnet. Die Substratschicht weist auf der der Verbindungsschicht zugewandten Seite mehrere Auskopplungsstrukturen auf, die dazu geeignet sind, sich innerhalb der Substratschicht ausbreitendes Licht in Richtung auf die metallische Schicht hin aus der Substratschicht auszukoppeln.

Die Erfindung basiert unter anderem auf der Idee, dass sich die Leuchtinformation aus der Anordnung der Auskopplungsstrukturen in der Verbindungsschicht ergibt, wobei das aus den Auskopplungsstrukturen austretende Licht durch die metallische, lichtdurchlässige Schicht hindurch wahrgenommen werden kann. Wird jedoch kein Licht aus den Auskopplungsstrukturen ausgekoppelt, so wird die metallische, lichtdurchlässige Schicht als homogene Oberfläche wahrgenommen, ohne dass dem Verwender die für die Leuchtinformation notwendige Strukturierung auffallen würde.

Die transparente Substratschicht kann dabei aus beliebigen Materialien bestehen, die hinreichend transparent sind. Bevorzugt besteht die transparente Substratschicht aus einem transparenten Kunststoff wie z.B. PMMA, PETA, PC, ABS oder Nylon.

Die Begriffe "transparent" und "lichtdurchlässig" beziehen sich im Kontext der vorliegenden Erfindung auf den vom Menschen sichtbaren Anteil des elektromagnetischen Spektrums, das heißt auf Wellenlängen zwischen 380 nm und 780 nm (nachfolgen auch als Lichtspektrum bezeichnet). Dementsprechend ist die Substratschicht bevorzugt über das gesamte Lichtspektrum transparent. Es sind jedoch auch Ausführungsformen vorstellbar, bei denen die Substratschicht lediglich in einem Wellenlängenintervall innerhalb des Lichtspektrums transparent ist. Kommt beispielsweise als Lichtquelle eine rote Leuchtdiode zum Einsatz, so ist es grundsätzlich ausreichend, wenn die Substratschicht über das Emissionsband der Leuchtdiode transparent ist. Gleiches gilt für die metallische, lichtdurchlässige Schicht, die in einem solchen Fall grundsätzlich auch nur im roten Wellenlängenbereich lichtdurchlässig zu sein braucht. Im Hinblick auf einen möglichst vielseitigen Einsatz des erfindungsgemäßen Leuchtkörpers ist es jedoch bevorzugt, dass die Substratschicht über das gesamte Lichtspektrum transparent ist.

Bevorzugt ist der Transmissionsgrad der Substratschicht mindestens in einem Wellenlängenintervall des Lichtspektrums und vorzugsweise über das gesamte Lichtspektrum größer als 60%, bevorzugt größer als 70% und besonders bevorzugt größer als 80%.

Bevorzugt ist der Transmissionsgrad der Verbindungsschicht mindestens in einem Wellenlängenintervall des Lichtspektrums und vorzugsweise über das gesamte Lichtspektrum größer als 60%, bevorzugt größer als 70% und besonders bevorzugt größer als 80%.

Die metallische, lichtdurchlässige Schicht hat bevorzugt über ein Wellenlängenintervall innerhalb des Lichtspektrums und vorzugsweise über das gesamte Lichtspektrum einen Transmissionsgrad von mindestens 40%, bevorzugt von mindestens 60% und besonders bevorzugt von mindestens 80%. Der Transmissionsgrad der metallischen, lichtdurchlässigen Schicht kann dabei durch die Wahl des Materials einerseits und die Schichtdicke andererseits gesteuert werden. Bevorzugt beträgt die Dicke der metallischen, lichtdurchlässigen Schicht zwischen 2 nm und 40 nm, stärker bevorzugt zwischen 10 nm und 30 nm und besonders bevorzugt zwischen 12 nm und 20 nm. Als Materialien für die metallische, lichtdurchlässige Schicht kommen insbesondere die folgenden Materialien in Frage: Aluminium, Chrom, Titan, Edelstahl, Kupfer, Gold, Silber und Legierungen aus AlCu, AlMg, AlCu. Eine metallische, lichtdurchlässige Schicht mit der entsprechenden Schichtdicke und einer hinreichenden Homogenität lässt sich beispielsweise mittels physikalischer Gasphasenabscheidung herstellen. Im Hinblick auf eine möglichst große Homogenität der metallischen, lichtdurchlässigen Schicht stellt die Kathodenzerstäubung (Sputtern) ein besonders bevorzugtes Verfahren dar. Bevorzugt beträgt die Schichtdickenhomogenität der Schicht maximal ± 5%, stärker bevorzugt maximal ± 3% und besonders bevorzugt maximal ± 2%. Messverfahren zur Bestimmung der Schichtdickenhomogenität sind dem Fachmann geläufig. So kann die Schichtdickenhomogenität beispielsweise mittels photometrischer Transmissions- und Reflexionsmessung (z.B. unter Verwendung des Geräts ARGUS XE der Firma Dr. Schwab) bestimmt werden.

Die der Verbindungsschicht abgewandte Seite der metallischen, lichtdurchlässigen Schicht ist bevorzugt so plan bzw. glatt, dass der Leuchtkörper metallisch glänzend erscheint. Bevorzugt beträgt die Oberflächenrauigkeit der der metallischen, lichtdurchlässigen Schicht auf der der Verbindungsschicht abgewandte Seite maximal 5 µm, bevorzugt maximal 4 µm und besonders bevorzugt maximal 3,5 µm. Messverfahren zur Bestimmung der Oberflächenrauigkeit sind dem Fachmann geläufig. So kann die Oberflächenrauigkeit beispielsweise mit berührenden Technologien (z.B. mittels Handmessgeräten mit Gleitkufentaster oder hochwertigen stationären Tastschrittgeräten mit Freitaster) oder berührungslosen Systemen (z.B. mittels Konfokaltechnik) ermittelt werden.

Zwischen der transparenten Substratschicht und der metallischen, lichtdurchlässigen Schicht befindet sich eine Verbindungsschicht mit einem zweiten Brechungsindex, der sich vom ersten Brechungsindex unterscheidet und bevorzugt kleiner ist als der erste Brechungsindex. Es ist ferner bevorzugt, dass sich der zweite Brechungsindex bei Standardbedingungen von dem Brechungsindex von Luft unterscheidet. Bevorzugt ist der zweite Brechungsindex (gemessen bei Standardbedingungen über das gesamte Lichtspektrum) größer als 1,0003, stärker bevorzugt größer als 1,0005, noch stärker bevorzugt größer als 1,001 und am meisten bevorzugt größer als 1,002. Grundsätzlich kann die Verbindungsschicht beliebige Materialien aufweisen, solange die Brechungsindexdifferenz gewährleistet ist, die sicherstellen soll, dass sich innerhalb der Substratschicht ausbreitendes Licht an der Grenzfläche zwischen transparenter Substratschicht und Verbindungsschicht möglichst vollständig reflektiert wird und Licht im Wesentlichen nur über die Auskopplungsstrukturen aus der transparenten Substratschicht austreten kann. Ferner soll das Material der Verbindungsschicht dazu geeignet sein, die transparente Substratschicht mit der metallischen, lichtdurchlässigen Schicht dauerhaft zu verbinden. Bevorzugt besteht die Verbindungsschicht aus einem ausgehärteten Lack. Grundsätzlich geeignet sind hier thermisch härtende oder lösemittelhaltige Lacke. Besonders bevorzugt ist jedoch eine Verbindungsschicht aus UV-härtendem Lack.

Die Verbindungsschicht dient einerseits der Verbindung der metallischen, lichtdurchlässigen Schicht mit der transparenten Substratschicht. Bevorzugt ist die zur metallischen, lichtdurchlässigen Schicht weisende Oberfläche der Verbindungsschicht plan ausgebildet, um die Beschichtung mit der metallischen, lichtdurchlässigen Schicht zu vereinfachen bzw. die Homogenität der metallischen, lichtdurchlässigen Schicht zu verbessern. Zum Anderen dient die Verbindungsschicht dem Ausgleich etwaiger durch die Auskopplungsstrukturen in der transparenten Substratschicht verursachten Unebenheiten, wie nachfolgend noch näher erläutert werden wird.

Die Substratschicht weist auf der der Verbindungsschicht zugewandten Seite mehrere Auskopplungsstrukturen auf, die dazu geeignet sind, sich innerhalb der Substratschicht ausbreitendes Licht in Richtung auf die metallische Schicht aus der Substratschicht auszukoppeln. Mit anderen Worten sind Bereiche in der Substratschicht vorgesehen, in denen die Bedingungen für die Totalreflexion für sich innerhalb der Substratschicht ausbreitendes Licht unterbrochen sind. Gemäß der Erfindung sind diese Auskopplungsstrukturen als Aussparungen in der Substratschicht ausgebildet. Grundsätzlich können diese Aussparungen eine beliebige Form haben. Es ist jedoch besonders bevorzugt, kegelförmige Aussparungen bzw. Vertiefungen in der Substratschicht vorzusehen.

Diese Aussparungen sind mindestens teilweise und besonders bevorzugt vollständig mit dem Material der Verbindungsschicht ausgefüllt. Dadurch wird eine plane Oberfläche für die nachfolgende Beschichtung mit der metallischen, lichtdurchlässigen Schicht bereitgestellt. Anderenfalls würde sich die metallische, lichtdurchlässige Schicht in die Aussparungen hinein erstrecken, was dazu führen könnte, dass diese Aussparungen sichtbar bleiben würden.

Der erfindungsgemäße Leuchtkörper kann ferner eine auf der metallischen Schicht aufgebrachte Schutzschicht aufweisen. Auch hierfür kommen grundsätzlich beliebige Schutzlacke in Frage. Besonders bevorzugt ist jedoch die Verwendung von UV-härtendem Schutzlack. Die Schutzschicht kann transparent und farblos sein oder farbig ausgebildet sein, um den farblichen Eindruck des Leuchtkörpers bei Tageslicht einerseits und den farblichen Eindruck des ausgekoppelten Lichts andererseits zu beeinflussen.

Die Substratschicht kann ferner mindestens eine Einkopplungsstruktur aufweisen, die dazu geeignet ist, Licht von außen in die Substratschicht einzukoppeln. Besonders bevorzugt dient bzw. dienen eine oder mehrere Stirnseiten der Substratschicht als Einkopplungsstruktur(en). Auf diese Weise kann besonders einfach Licht unter dem richtigen Winkel in die Substratschicht eingekoppelt werden. Alternativ oder zusätzlich sind jedoch auch eine oder mehrere Einkopplungsstrukturen auf der der Verbindungsschicht abgewandten Seite der transparenten Substratschicht möglich.

Bevorzugt beträgt die Differenz zwischen dem ersten Brechungsindex und dem zweiten Brechungsindex mindesten 0,02, stärker bevorzugt mindestens 0,03 und besonders bevorzugt mindestens 0,04. Bevorzugt wird die jeweilige Brechungsindexdifferenz bei Standardbedingungen über das gesamte Lichtspektrum erreicht.

Die Verbindungsschicht sowie die metallische, lichtdurchlässige Schicht sind im Hinblick auf die Auskopplungsstrukturen derart ausgebildet, dass die Auskopplungsstrukturen mit bloßem Auge nicht wahrnehmbar sind, wenn kein Licht aus den Auskopplungsstrukturen ausgekoppelt wird, und dass aus den Auskopplungsstrukturen ausgekoppeltes Licht mit bloßem Auge durch die metallische Schicht hindurch wahrnehmbar ist, wenn Licht mit einer Lichtstärke von 50 Candela in die Substratschicht eingekoppelt wird. Dies kann beispielsweise dadurch erreicht werden, dass die Auskopplungsstrukturen derart mit dem Material der Verbindungsschicht ausgefüllt bzw. abgedeckt sind, dass die Grenzfläche zwischen der Verbindungsschicht und der metallischen, lichtdurchlässigen Schicht im Wesentlichen plan und homogen ist. Ferner ist es hierfür bevorzugt, dass die metallische, lichtdurchlässige Schicht nach außen (bzw. zur Schutzschicht) hin eine zumindest teilweise reflektierende Schicht bildet. Bevorzugt ist der Reflexionsgrad der metallischen, lichtdurchlässigen Schicht über das gesamte Lichtspektrum mindestens 50%, stärker bevorzugt mindestens 40% und besonders bevorzugt mindestens 30%.

Die Auskopplungsstrukturen sind bevorzugt in einer vorbestimmten Anordnung bzw. einem vorbestimmten Muster auf der Substratschicht ausgebildet, sodass die Gesamtheit der durch die Auskopplungsstrukturen gebildeten Lichtpunkte eine gewünschte Information oder ein gewünschtes Bild darstellt. Das Muster kann dabei durch die Anordnung und Dichte identischer Auskopplungsstrukturen gebildet werden. Alternativ können auch Auskopplungsstrukturen mit unterschiedlicher Form und/oder Größe vorhanden sein.

Der erfindungsgemäße Leuchtkörper kann grundsätzlich beliebige dreidimensionale Formen aufweisen und beispielsweise einen Polyeder, einen konvexen Körper oder einen Rotationskörper bilden. Handelt es sich um eine tatsächlich dreidimensionale Form (und nicht einen planen Leuchtkörper mit einer gewissen Dicke), so bildet bevorzugt der Leuchtkörper eine Art Hülle, wobei die metallische, lichtdurchlässige Schicht (und ggf. die darauf aufgebrachte Schutzschicht) des Leuchtkörpers eine Leuchtkörperoberfläche. Mit anderen Worten ist es bevorzugt, dass mindestens ein Teil der Außenoberfläche des dreidimensionalen Leuchtkörpers durch die metallische, lichtdurchlässige Schicht (und ggf. die darauf aufgebrachte Schutzschicht) gebildet wird.

Bevorzugt sind die transparente Substratschicht, die Verbindungsschicht und die metallische, lichtdurchlässige Schicht zumindest abschnittsweise gekrümmt und/oder abgewinkelt. Dabei ist der Krümmungsradius des Krümmungskreises des gekrümmten Abschnitts der metallischen, lichtdurchlässigen Schicht zumindest abschnittsweise kleiner als 1 m, bevorzugt kleiner als 50 cm, stärker bevorzugt kleiner als 30 cm und besonders bevorzugt kleiner als 20 cm. Mit anderen Worten ist es bevorzugt, dass der Leuchtkörper einen dreidimensionalen Körper bildet, dessen Außenoberfläche, die durch die metallische, lichtdurchlässige Schicht (und ggf. die darauf aufgebrachte Schutzschicht) als Leuchtkörperoberfläche gebildet wird, zumindest abschnittsweise gekrümmt und/oder abgewinkelt ist.

Gemäß einer besonders bevorzugten Ausführungsform definiert der Leuchtkörper und insbesondere dessen transparente Substratschicht zumindest abschnittsweise einen Innenraum. In diesem Fall weist die Substratschicht bevorzugt mehrere Einkopplungsstrukturen auf, die auf der der Verbindungsschicht abgewandten Seite angeordnet und dazu geeignet sind, Licht von dem Innenraum (aber von außerhalb der Substratschicht) in die Substratschicht einzukoppeln. Besonder bevorzugt ist in diesem Fall eine im Innenraum angeordnete Lichtquelle vorgesehen, mittels derer Licht in die Substratschicht eingekoppelt werden kann.

Der erfindungsgemäße Leuchtkörper kann grundsätzlich in den unterschiedlichsten Bereichen zur Anwendung kommen. Bevorzugt ist die Verwendung des erfindungsgemäßen Leuchtkörpers in den folgenden Produkten: Verpackung, Behältnis, illuminierte Mittelkonsole eines Kfz, Schaltknauf eines Kfz, Oberfläche eines elektronischen Geräts wie z.B. PC, Laptop, Notepad, Smartphone, Kugelschreiber, Lichtschalter bzw. Lichtschalterabdeckung; Haushaltsgeräte wie z.B. Kaffeemaschine.

Hierfür kann der Leuchtkörper grundsätzlich jede beliebige Form annehmen. Bevorzugt wird die Form des Leuchtkörpers durch die transparente Substratschicht definiert. Besonders bevorzugt ist die transparente Substratschicht plan ausgebildet und hat eine im Wesentlichen konstante Dicke, die bevorzugt im Bereich zwischen 0,5 mm und 20 mm, stärker bevorzugt zwischen 1 mm und 10 mm und besonders bevorzugt zwischen 2 mm und 6 mm liegt. Die transparente Substratschicht kann aber auch, wie oben bereits erläutert, gekrümmt sein und/oder einen dreidimensionalen Hohlkörper (wie zum Beispiel eine Verpackung oder ein Behältnis) ausbilden.

Die vorliegende Erfindung richtet sich ferner auf eine Verpackung oder ein Behältnis mit einem Leuchtkörper wie oben beschrieben. Dabei weist mindestens eine Außenoberfläche der Verpackung bzw. des Behältnisses den Leuchtkörper auf oder wird durch diesen gebildet. Die Verpackung bzw. das Behältnis weist bevorzugt ferner eine Lichtquelle auf, die dazu geeignet ist, Licht in die Substratschicht des Leuchtkörpers einzukoppeln. Bevorzugt handelt es sich bei der Lichtquelle um eine oder mehrere Leuchtdioden. Bevorzugt weist die Verpackung bzw. das Behältnis ferner eine Steuerung auf, die die Lichtquelle unter vorbestimmten Bedingungen ein- bzw. ausschaltet. Beispielsweise kann die Steuerung mit einem Lichtsensor versehen sein und so programmiert sein, dass die Lichtquelle nur im Dunkeln eingeschaltet wird. Alternativ oder zusätzlich kann ein Mechanismus vorgesehen sein, der die Lichtquelle einschaltet, wenn beispielsweise die Verpackung bzw. das Behältnis geöffnet wird. Beispielsweise könnte ein Teil der Außenoberfläche (oder der die gesamte Außenoberfläche) einer Lippenstiftverpackung (bzw. eines Lippenstiftbehältnisses) mit dem erfindungsgemäßen Leuchtkörper ausgestattet sein, sodass die Verpackung unter Einwirkung von äußerem Licht zunächst metallisch glänzend erscheint. Beim Öffnen und Verwenden des Lippenstifts könnte dann die Lichtquelle aktiviert werden, sodass die Lippenstifthülle beginnt, zu leuchten und/oder ein bestimmtes Logo anzuzeigen.

Die vorliegende Erfindung richtet sich ferner auf ein Verfahren zur Herstellung eines Leuchtkörpers, insbesondere eines Leuchtkörpers wie oben beschrieben. Gemäß dem erfindungsgemäßen Verfahren wird zunächst eine transparente Substratschicht mit einem ersten Brechungsindex bereitgestellt, wobei die Substratschicht auf einer ersten Seite mehrere Auskopplungsstrukturen aufweist, die dazu geeignet sind, sich innerhalb der Substratschicht ausbreitendes Licht aus der Substratschicht auszukoppeln. Anschließend wird die erste Seite der Substratschicht mit einem zweiten Brechungsindex beschichtet, der sich vom ersten Brechungsindex unterscheidet. Schließlich wird die Verbindungsschicht mit einer metallischen, lichtdurchlässigen Schicht, bevorzugt durch physikalische Gasphasenabscheidung, beschichtet. Optional kann die metallische Schicht mit einer Schutzschicht beschichtet werden. Das Beschichten der Verbindungsschicht mit einer metallischen, lichtdurchlässigen Schicht erfolgt bevorzugt mittels Kathodenzerstäubung bzw. Sputtern.

Die oben diskutierten bevorzugten Merkmale des Leuchtkörpers können selbstverständlich auch im Zusammenhang des erfindungsgemäßen Verfahrens zum Einsatz kommen.

Bevorzugt weist der Schritt des Bereitstellens einer transparenten Substratschicht das Ausbilden der Auskopplungsstrukturen in Form von, bevorzugt kegelförmigen, Aussparungen auf der ersten Seite der Substratschicht auf. Bevorzugt werden diese Aussparungen mithilfe eines Lasers ausgebildet. Bevorzugt werden die Aussparungen in einem vorbestimmten Muster auf der ersten Seite der Substratschicht ausgebildet und/oder mit unterschiedlicher Form und/oder Größe ausgebildet. Hierfür kann der Laserstrahl mithilfe einer geeigneten Vorrichtung (z.B. Galvo Scanners) an die entsprechenden Positionen der Substratschicht gelenkt werden. Die Größe der Aussparungen können mittels Laserintensität und/oder Bestrahlungsdauer genauestens kontrolliert werden. Beispielsweise lassen sich mit herkömmlichen Lasersystemen problemlos Kegel mit Kegeldurchmessern zwischen 40 µm und 400 µm erzielen. Mithilfe der Anordnung und Dichte der Kegel lassen sich Schriftzüge, Logos oder andere Strukturen erzeugen.

Analog zu den Auskopplungsstrukturen lassen sich auch eine oder mehrere Einkopplungsstrukturen ausbilden, die dazu geeignet sind, Licht von außen in die Substratschicht einzukoppeln. Hierfür eignen sich besonders bevorzugt Kegel mit einem Durchmesser von mindestens 100 µm, bevorzugt mindestens 200 µm und besonders bevorzugt mindestens 300 µm.

Das Beschichten der ersten Seite der Substratschicht mit einer Verbindungsschicht erfolgt bevorzugt durch ein Aufbringen eines Lacks auf der ersten Seite der Substratschicht und das anschließende Aushärten des Lacks. Je nach Art des Lacks kann das Aushärten durch Trocknen, Erhitzen oder Bestrahlen mit beispielsweise UV-Licht erfolgen.

Die vorliegende Erfindung stellt einen verbesserten Leuchtkörper bereit, der sich mit einfachen Mitteln und kostengünstig herstellen lässt, höchsten Ansprüchen an die Ästhetik gerecht wird und eine neue Funktionalität bietet, indem einerseits Informationen mithilfe von Licht angezeigt werden können und andererseits unter Tageslichtbedingungen ein homogenes und, je nach Anwendungsgebiet, reflektierendes Erscheinungsbild erzielt wird.

Nachfolgend werden bevorzugte Ausführungsformen der vorliegenden Erfindung unter Bezugnahme auf die Figuren näher beschrieben. Es zeigen:
- Fig. 1: eine schematische Querschnittansicht durch einen erfindungsgemäßen Leuchtkörper gemäß einer bevorzugten Ausführungsform;
- Fig. 2: eine perspektivische Prinzipskizze eines erfindungsgemäßen Leuchtkörpers gemäß einer bevorzugten Ausführungsform unter Tageslichtbedingungen;
- Fig. 3: eine perspektivische Prinzipskizze des Leuchtkörpers gemäß Figur 2 in einem Zustand, in dem Licht aus den Auskopplungsstrukturen ausgekoppelt wird;
- Fig. 4: eine schematische Querschnittansicht durch einen erfindungsgemäßen Leuchtkörper gemäß einer weiteren bevorzugten Ausführungsform;
- Fig. 5: eine perspektivische Prinzipskizze eines erfindungsgemäßen Leuchtkörpers gemäß einer bevorzugten Ausführungsform unter Tageslichtbedingungen;
- Fig. 6: eine perspektivische Prinzipskizze des Leuchtkörpers gemäß Figur 5 in einem Zustand, in dem Licht aus den Auskopplungsstrukturen ausgekoppelt wird; und
- Fig.7: eine schematische Querschnittansicht durch den erfindungsgemäßen Leuchtkörper gemäß Figuren 5 und 6.

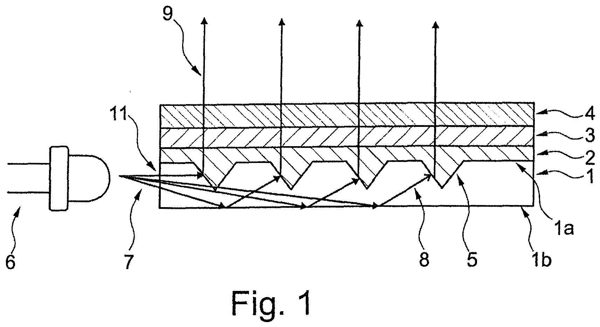

Eine bevorzugte Ausführungsform des erfindungsgemäßen Leuchtkörpers ist in einer schematischen Querschnittansicht in Figur 1 gezeigt. Der Leuchtkörper weist eine transparente Substratschicht 1 mit einem ersten Brechungsindex, eine Verbindungsschicht 2 mit einem zweiten Brechungsindex, der sich vom ersten Brechungsindex unterscheidet, und eine metallische, lichtdurchlässige Schicht 3 auf, wobei die Verbindungsschicht 2 zwischen der Substratschicht 1 und der metallischen Schicht 3 angeordnet ist. Die Substratschicht 1 weist eine erste Seite 1a, die der Verbindungsschicht 2 zugewandt ist, und eine zweite, gegenüberliegende Seite 1b auf. Auf der ersten Seite 1a weist die Substratschicht 1 mehrere Auskopplungsstrukturen 5 auf, die dazu geeignet sind, sich innerhalb der Substratschicht 1 ausbreitendes Licht 8 in Richtung auf die metallische Schicht 3 hin aus der Substratschicht 1 auszukoppeln.

In der dargestellten bevorzugten Ausführungsform sind die Auskopplungsstrukturen 5 als kegelförmige Aussparungen bzw. Vertiefungen mit identischer Größe und Form ausgebildet. Die Aussparungen bzw. Vertiefungen können jedoch grundsätzlich beliebige andere Formen annehmen und beispielsweise pyramiden- oder prismenförmig sein. Die Ausnehmungen bzw. Vertiefungen müssen auch nicht spitz zulaufen, sondern können beispielsweise an ihrem unteren Ende auch abgerundet sein. Ferner können Auskopplungsstrukturen unterschiedlicher Form und Größe vorhanden sein. Insbesondere ist es bevorzugt, dass die lokale Dichte der Auskopplungsstrukturen variiert, um so die austretende Helligkeit kontrolliert variieren zu können.

Das sich in der Substratschicht 1 ausbreitende Licht 8 tritt durch eine oder mehrere Einkopplungsstrukturen 11 in die Substratschicht 1 ein. In der dargestellten bevorzugten Ausführungsform wird die Einkopplungsstruktur 11 durch eine plane Stirnseite der Substratschicht 1 gebildet. Nachdem das Licht 7 durch die Einkopplungsstruktur 11 in die Substratschicht 1 eingekoppelt wurde, wird das Licht an der durch die zweite Seite 1b der Substratschicht 1 gebildete Grenzschicht total reflektiert (8) und an den Auskopplungsstrukturen 5 ausgekoppelt (9). Das aus den Auskopplungsstrukturen 5 ausgekoppelte Licht 9 durchdringt die transparente Verbindungsschicht 2 sowie die metallische, lichtdurchlässige Schicht 3. Aufgrund der Anordnung der Auskopplungsstrukturen 5 in einem vorbestimmten Muster nimmt der Nutzer das austretende Licht 9 in Form des Musters wahr.

Das eingekoppelte Licht 7 kann durch eine externe Lichtquelle 6 wie beispielsweise eine externe Leuchtdiode bereitgestellt bzw. erzeugt werden. Alternativ könnte die Leuchtdiode 6 auch in die Stirnseite des Substrats 1 eingebettet sein. Im Falle eines relativ großflächigen Substrats 1 ist es bevorzugt, dass Licht von allen Seiten, das heißt beispielsweise an allen Stirnseiten des Substrats, in das Substrat 1 eingekoppelt wird.

Optional kann ferner eine Schutzschicht 4 vorgesehen sein, die einerseits die metallische, lichtdurchlässige Schicht vor Beschädigungen schützt und andererseits farbig sein kann, um das Erscheinungsbild des Leuchtkörpers zu beeinflussen.

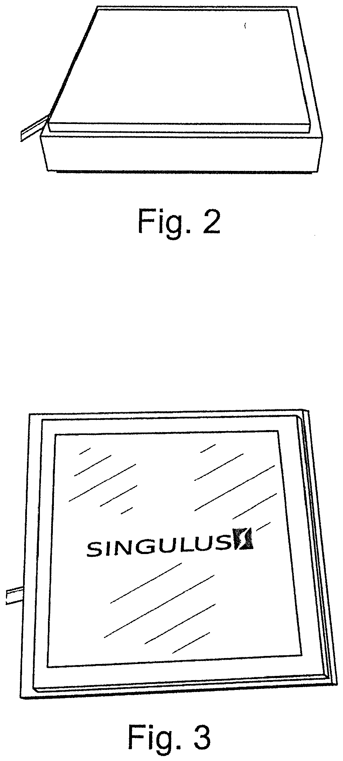

In den Figuren 2 und 3 sind jeweils perspektivische Prinzipskizzen einer bevorzugten Ausführungsform des erfindungsgemäßen Leuchtkörpers einmal ohne Einkoppeln von Licht (Figur 2) und einmal mit Einkoppeln von Licht (Figur 3) zu sehen. Wie in Figur 2 zu erkennen ist, sind die Auskopplungsstrukturen mit bloßem Auge nicht wahrnehmbar, wenn kein Licht aus den Auskopplungsstrukturen ausgekoppelt wird. Vielmehr erscheint die Oberfläche des Leuchtkörpers als homogene Schicht, die metallisch glänzt bzw. spiegelt. Bei geringerer Umgebungshelligkeit und eingekoppeltem Licht hingegen (vgl. Figur 3) ist aus den Auskopplungsstrukturen ausgekoppeltes Licht mit bloßem Auge durch die metallische Schicht hindurch wahrnehmbar. In der dargestellten bevorzugten Ausführungsform sind die Auskopplungsstrukturen derart angeordnet, dass sie den Schriftzug "SINGULUS" bilden, der sich scharf und deutlich erkennbar von der restlichen Oberfläche des Leuchtkörpers absetzt.

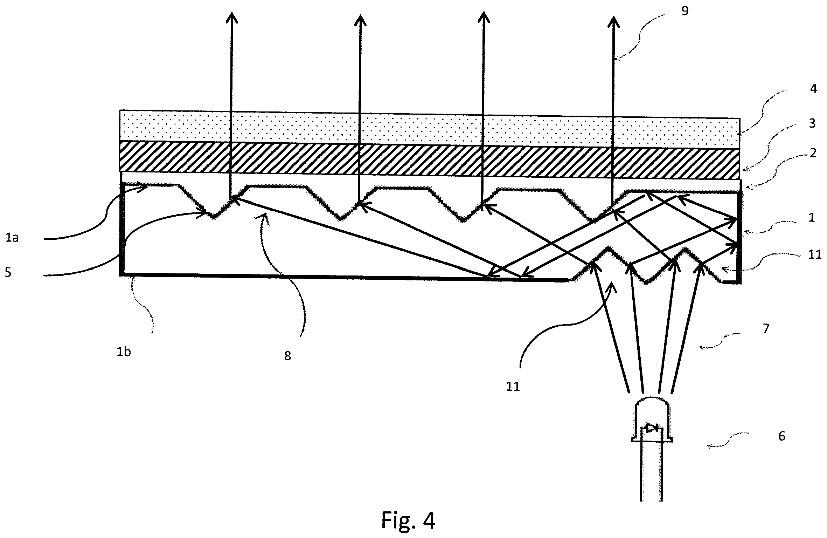

Eine weitere bevorzugte Ausführungsform des erfindungsgemäßen Leuchtkörpers ist in einer schematischen Querschnittansicht in Figur 4 gezeigt. Der Leuchtkörper weist eine transparente Substratschicht 1 mit einem ersten Brechungsindex, eine Verbindungsschicht 2 mit einem zweiten Brechungsindex, der sich vom ersten Brechungsindex unterscheidet, und eine metallische, lichtdurchlässige Schicht 3 auf, wobei die Verbindungsschicht 2 zwischen der Substratschicht 1 und der metallischen Schicht 3 angeordnet ist. Die Substratschicht 1 weist eine erste Seite 1a, die der Verbindungsschicht 2 zugewandt ist, und eine zweite, gegenüberliegende Seite 1b auf. Auf der ersten Seite 1a weist die Substratschicht 1 mehrere Auskopplungsstrukturen 5 auf, die dazu geeignet sind, sich innerhalb der Substratschicht 1 ausbreitendes Licht 8 in Richtung auf die metallische Schicht 3 hin aus der Substratschicht 1 auszukoppeln.

Im Gegensatz zur Ausführungsform gemäß Fig. 1 tritt das sich in der Substratschicht 1 ausbreitende Licht 8 bei dieser Ausführungsform durch eine oder mehrere Einkopplungsstrukturen 11 in die Substratschicht 1 ein, die auf der der Verbindungsschicht 2 abgewandten Seite 1b in Form von z.B. kegelförmigen Vertiefungen vorgesehen sind. Dadurch kann das Licht von der der metallischen, lichtdurchlässigen Schicht 3 gegenüberliegenden Seite in die Substratschicht 1 eingekoppelt werden. Dies ist dann besonders vorteilhaft, wenn der Leuchtkörper eine dreidimensionale Struktur, beispielsweise mit einem Innenraum, bildet.

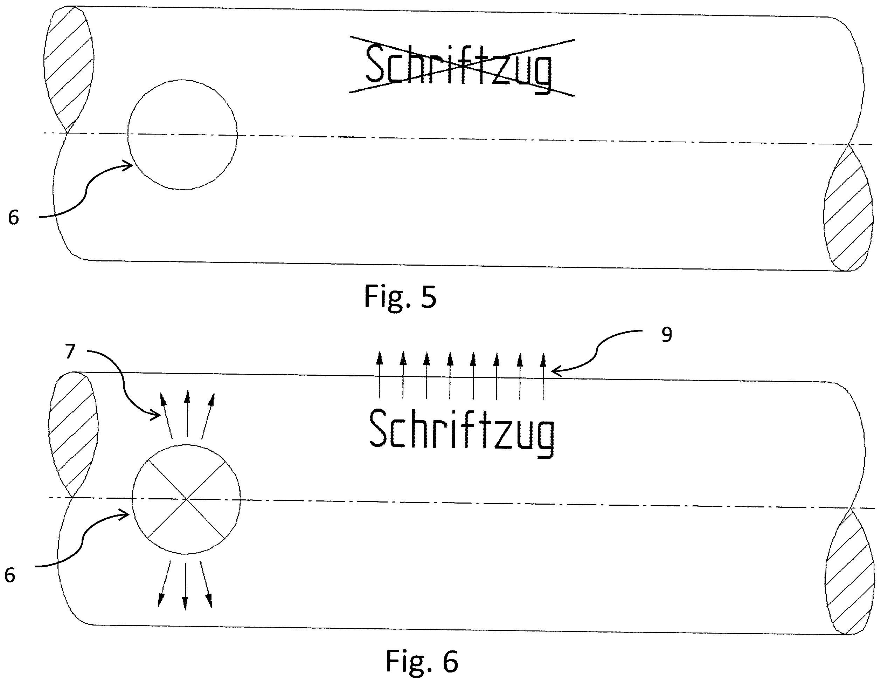

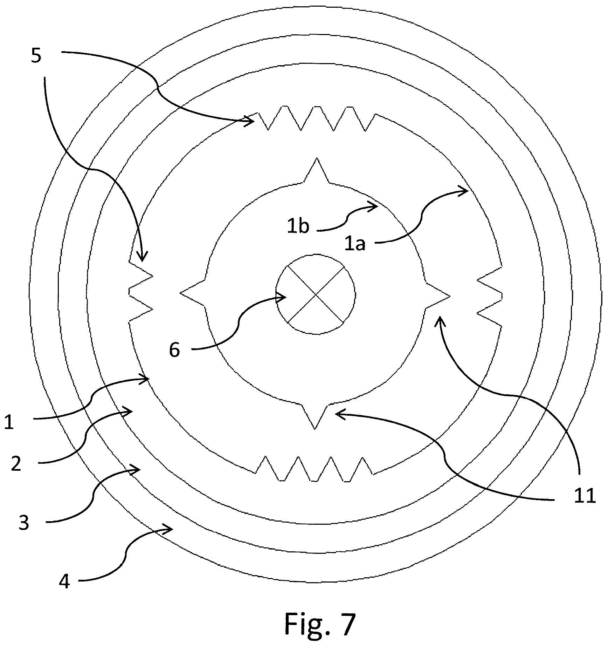

Eine bevorzugte Ausführungsform eines solchen dreidimensionalen Leuchtkörpers mit einer im Innenraum angeordneten Lichtquelle ist in den schematischen Prinzipskizzen der Fig. 5 und 6 zu sehen, bei denen die in Fig. 4 abgebildete Struktur zu einem zylindrischen Leuchtkörper geformt wurde, in dessen Innenraum eine Lichtquelle 6 angeordnet ist, die einmal ausgeschaltet ist, so dass kein Einkoppeln von Licht erfolgt (Figur 5), und einmal eingeschaltet ist, so dass ein Einkoppeln von Licht erfolgt (Figur 6) zu sehen. Wie in Figur 5 zu erkennen ist, sind die Auskopplungsstrukturen mit bloßem Auge nicht wahrnehmbar, wenn kein Licht aus den Auskopplungsstrukturen ausgekoppelt wird, was der durchgestrichene "Schriftzug" symbolisieren soll. Tatsächlich ist hier lediglich eine homogene Oberfläche zu sehen, so dass die das Wort "Schriftzug" bildenden Auskopplungsstrukturen gar nicht erkennbar sind. Vielmehr erscheint die Oberfläche des zylinderförmigen Leuchtkörpers als homogene Fläche, die metallisch glänzt bzw. spiegelt. Bei geringerer Umgebungshelligkeit und eingekoppeltem Licht hingegen (vgl. Figur 6) ist aus den Auskopplungsstrukturen ausgekoppeltes Licht mit bloßem Auge durch die metallische Schicht hindurch wahrnehmbar. In der dargestellten bevorzugten Ausführungsform sind die Auskopplungsstrukturen derart angeordnet, dass sie den Schriftzug "Schriftzug" bilden, der sich im Fall der der Fig. 6 scharf und deutlich erkennbar von der restlichen Oberfläche des Leuchtkörpers absetzt. Beschreibung Fig. 7 fehlt.

Fig.7 zeigt eine schematische Querschnittansicht durch den erfindungsgemäßen Leuchtkörper gemäß Figuren 5 und 6. Wie hier gut zu erkennen ist, wurde im Fall der Ausführungsform gemäß den Figuren 5-7 die in Fig. 4 abgebildete Struktur zu einem zylindrischen Leuchtkörper geformt, in dessen Innenraum eine Lichtquelle 6 angeordnet ist. Dabei liegt die transparente Substratschicht 1 mit einem ersten Brechungsindex innen und bildet den die Lichtquelle enthaltenden Innenraum. Darüber angeordnet sind, in dieser Reihenfolge, die Verbindungsschicht 2 mit einem zweiten Brechungsindex, der sich vom ersten Brechungsindex unterscheidet, die metallische, lichtdurchlässige Schicht 3 sowie die optionale Schutzschicht 4. Die Substratschicht 1 weist eine erste Seite 1a, die der Verbindungsschicht 2 zugewandt ist, und eine zweite, gegenüberliegende Seite 1b auf. Auf der ersten Seite 1a weist die Substratschicht 1 mehrere Auskopplungsstrukturen 5 auf, die dazu geeignet sind, sich innerhalb der Substratschicht 1 ausbreitendes Licht in Richtung auf die metallische Schicht 3 hin aus der Substratschicht 1 auszukoppeln. In der dargestellten Ausführungsform sind vier Gruppen solcher Auskopplungsstrukturen 5 im Abstand von jeweils etwa 90° angeordnet. Jedoch können auch mehr oder weniger solcher Gruppen von Auskopplungsstrukturen 5 vorgesehen sein. Bevorzugt erstrecken sich die Auskopplungsstrukturen über den gesamten Umfang der gekrümmten Substratschicht 1, um eine möglichst homogene Beleuchtung des gesamten Leuchtkörpers zu erzielen. Es ist jedoch auch bevorzugt, lediglich bestimmte Regionen homogen oder inhomogen auszuleuchten, um bspw. lokal Symbole oder Schriftzüge zu beleuchten.

Das sich in der Substratschicht 1 ausbreitende Licht tritt bei dieser Ausführungsform durch eine oder mehrere Einkopplungsstrukturen 11 vom die Lichtquelle 6 enthaltenden Innenraum in die Substratschicht 1 ein, die auf der der Verbindungsschicht 2 abgewandten Seite 1b in Form von z.B. kegelförmigen Vertiefungen vorgesehen sind. In der dargestellten Ausführungsform sind vier einzelne Einkopplungsstrukturen 11 im Abstand von jeweils etwa 90° angeordnet. Jedoch können auch mehr oder weniger Einkopplungsstrukturen 11 vorgesehen sein, die auch ähnlich den Auskopplungsstrukturen in Gruppen angeordnet sein können. Bevorzugt erstrecken sich die auch die Einkopplungsstrukturen über den gesamten Umfang der gekrümmten Substratschicht 1, um eine möglichst homogene Beleuchtung des gesamten Leuchtkörpers zu erzielen. Es ist jedoch auch bevorzugt, lediglich bestimmte Regionen homogen oder inhomogen auszuleuchten, um bspw. lokal Symbole oder Schriftzüge zu beleuchten.

Selbstverständlich ist die Fig. 7 lediglich exemplarisch zu verstehen. Die Ein- und Auskopplungsstrukturen können auch ganz anders angeordnet sein. Insbesondere ist es weder erforderlich, die Ein- und Auskopplungsstrukturen jeweils gegenüberliegende anzuordnen, noch ist eine symmetrische Anordnung zwingend.

## Patentansprüche

1. Leuchtkörper mit:
einer transparenten Substratschicht (1) mit einem ersten Brechungsindex;
einer Verbindungsschicht (2) mit einem zweiten Brechungsindex, der sich vom ersten Brechungsindex unterscheidet; und
einer metallischen, lichtdurchlässigen Schicht (3);
wobei die Verbindungsschicht (2) zwischen der Substratschicht (1) und der metallischen Schicht (3) angeordnet ist, **dadurch gekennzeichnet, dass** die Substratschicht (1) auf der der Verbindungsschicht (2) zugewandten Seite (1a) mehrere Auskopplungsstrukturen (5) aufweist, die dazu geeignet sind, sich innerhalb der Substratschicht (1) ausbreitendes Licht (7, 8) in Richtung auf die metallische Schicht (3) hin aus der Substratschicht (1) auszukoppeln, wobei die Auskopplungsstrukturen (5) als Aussparungen in der Substratschicht (1) ausgebildet sind und wobei die Aussparungen mindestens teilweise mit dem Material der Verbindungsschicht (2) ausgefüllt sind.

2. Leuchtkörper nach Anspruch 1, ferner mit einer auf der metallischen Schicht (3) aufgebrachten Schutzschicht (4).

3. Leuchtkörper nach Anspruch 1 oder 2, wobei die Substratschicht (1) mindestens eine Einkopplungsstruktur (11) aufweist, die dazu geeignet ist, Licht (7) von außen in die Substratschicht (1) einzukoppeln.

4. Leuchtkörper nach einem der vorigen Ansprüche, wobei die Aussparungen vollständig mit dem Material der Verbindungsschicht (2) ausgefüllt sind und die Grenzschicht zwischen der Verbindungsschicht (2) und der metallischen, lichtdurchlässigen Schicht (3) glatt ist.

5. Leuchtkörper nach einem der vorigen Ansprüche, wobei die Auskopplungsstrukturen (5) mit bloßem Auge nicht wahrnehmbar sind, wenn kein Licht aus den Auskopplungsstrukturen (5) ausgekoppelt wird, und wobei aus den Auskopplungsstrukturen (5) ausgekoppeltes Licht mit bloßem Auge durch die metallische Schicht (3) hindurch wahrnehmbar ist.

6. Leuchtkörper nach einem der vorigen Ansprüche, wobei die transparente Substratschicht (1), die Verbindungsschicht (2) und die metallische, lichtdurchlässige Schicht (3) zumindest abschnittsweise gekrümmt sind.

7. Leuchtkörper nach Anspruch 6, wobei der Krümmungsradius des Krümmungskreises des gekrümmten Abschnitts der metallischen, lichtdurchlässigen Schicht (3) zumindest abschnittsweise kleiner als 1 m, bevorzugt kleiner als 50 cm, stärker bevorzugt kleiner als 30 cm und besonders bevorzugt kleiner als 20 cm ist.

8. Leuchtkörper nach einem der vorigen Ansprüche, wobei die transparente Substratschicht (1) zumindest abschnittsweise einen Innenraum definiert.

9. Leuchtkörper nach Anspruch 8, wobei die Substratschicht (1) mehrere Einkopplungsstrukturen (11) aufweist, die auf der der Verbindungsschicht (2) abgewandten Seite angeordnet und dazu geeignet sind, Licht (7) von dem Innenraum in die Substratschicht (1) einzukoppeln.

10. Leuchtkörper nach Anspruch 8 oder 9, ferner mit einer im Innenraum angeordneten Lichtquelle (6).

11. Verpackung oder Behältnis mit einem Leuchtkörper nach einem der Ansprüche 1 bis 7, wobei mindestens eine Außenoberfläche der Verpackung oder des Behältnisses den Leuchtkörper aufweist oder durch diesen gebildet wird.

12. Verpackung oder Behältnis nach Anspruch 11, ferner mit einer Lichtquelle (6), die dazu geeignet ist, Licht (7) in die Substratschicht (1) des Leuchtkörpers einzukoppeln.

13. Verfahren zur Herstellung eines Leuchtkörpers nach einem der Ansprüche 1 bis 10, mit den folgenden Schritten:
Bereitstellen einer transparenten Substratschicht (1) mit einem ersten Brechungsindex, wobei die Substratschicht (1) auf einer ersten Seite (1a) mehrere Auskopplungsstrukturen (5) aufweist, die dazu geeignet sind, sich innerhalb der Substratschicht (1) ausbreitendes Licht (7, 8) aus der Substratschicht (1) auszukoppeln;
Beschichten der ersten Seite (1a) der Substratschicht (1) mit einer Verbindungsschicht (2) mit einem zweiten Brechungsindex, der sich vom ersten Brechungsindex unterscheidet;
Beschichten der Verbindungsschicht (2) mit einer metallischen, lichtdurchlässigen Schicht (3) durch physikalische Gasphasenabscheidung.

14. Verfahren nach Anspruch 13, wobei das Beschichten der Verbindungsschicht (2) mit einer metallischen, lichtdurchlässigen Schicht (3) durch Sputtern erfolgt.

## Claims

1. An illuminant comprising:
a transparent substrate layer (1) with a first index of refraction;
a connecting layer (2) with a second index of refraction that differs from the first index of refraction; and
a metallic, translucent layer (3);
wherein the connecting layer (2) is arranged between the substrate layer (1) and the metallic layer (3), **characterized in that** the substrate layer (1) comprises a plurality of decoupling structures (5) on the side (1a) facing the connecting layer (2), said decoupling structures (5) being suitable for decoupling light (7, 8) that propagates within the substrate layer (1) from the substrate layer (1) in the direction towards the metallic layer (3), wherein the decoupling structures (5) are formed as cavities within the substrate layer (1) and wherein the cavities are at least partially filled with the material of the connecting layer (2).

2. The illuminant according to claim 1, further comprising a protective layer (4) applied to the metallic layer (3).

3. The illuminant according to claim 1 or 2, wherein the substrate layer (1) comprises at least one coupling structure (11) suitable for coupling light (7) into the substrate layer (1) from outside.

4. The illuminant according to any one of the preceding claims, wherein the cavities are completely filled with the material of the connecting layer (2), and the interface between the connecting layer (2) and the metallic, translucent layer (3) is smooth.

5. The illuminant according to any one of the preceding claims, wherein the decoupling structures (5) are not discernible to the naked eye when no light is being decoupled from the decoupling structures (5), and wherein light decoupled from the decoupling structures (5) is discernible to the naked eye through the metallic layer (3).

6. The illuminant according to any one of the preceding claims, wherein the transparent substrate layer (1), the connecting layer (2) and the metallic, translucent layer (3) are curved at least in sections.

7. The illuminant according to claim 6, wherein the radius of curvature of the circle of curvature of the curved section of the metallic, translucent layer (3) is at least in sections smaller than 1 m, preferably smaller than 50 cm, more preferably smaller than 30 cm, and particularly preferably smaller than 20 cm.

8. The illuminant according to any one of the preceding claims, wherein the transparent substrate layer (1) at least in sections defines an interior space.

9. The illuminant according to claim 8, wherein the substrate layer (1) comprises a plurality of coupling structures (11) arranged on the side facing away from the connecting layer (2) and suitable for coupling light (7) into the substrate layer (1) from the interior space.

10. The illuminant according to claim 8 or 9, further comprising a light source (6) arranged within the interior space.

11. A packaging or container comprising an illuminant according to any one of claims 1 to 7, wherein at least one outer surface of the packaging or the container comprises the illuminant or is formed by the illuminant.

12. The packaging or container according to claim 11, further comprising a light source (6) suitable for coupling light (7) into the substrate layer (1) of the illuminant.

13. A method for producing an illuminant according to any one of claims 1 to 10, comprising the following steps:
providing a transparent substrate layer (1) with a first index of refraction, wherein on a first side (1a) the substrate layer (1) comprises a plurality of decoupling structures (5) suitable for decoupling light (7, 8) that propagates within the substrate layer (1) from the substrate layer (1);
coating the first side (1a) of the substrate layer (1) with a connecting layer (2) having a second index of refraction that differs from the first index of refraction;
coating the connecting layer (2) with a metallic, translucent layer (3) by way of physical vapor deposition.

14. The method according to claim 13, wherein the step of coating the connecting layer (2) with a metallic, translucent layer (3) is carried out by means of sputtering.

## Revendications

1. Luminaire avec :
une couche de substrat transparente (1) avec un premier indice de réfraction ;
une couche de liaison (2) avec un deuxième indice de réfraction différent du premier indice de réfraction ; et
une couche métallique translucide (3) ;
dans lequel la couche de liaison (2) est disposée entre la couche de substrat (1) et la couche métallique (3)
**caractérisé en ce que**
la couche de substrat (1) comprend, sur le côté (1a), orienté vers la couche de liaison (2), plusieurs structures de sortie (5), qui sont conçues pour faire sortie la lumière (7, 8) se propageant à l'intérieur de la couche de substrat (1) en direction de la couche métallique (3) hors de la couche de substrat (1), dans lequel les structures de sortie (5) sont conçues comme des évidements dans la couche de substrat (1) et dans lequel les évidements sont remplis au moins partiellement avec le matériau de la couche de liaison (2).

2. Luminaire selon la revendication 1, en outre avec une couche de protection (4) appliquée sur la couche métallique (3).

3. Luminaire selon la revendication 1 ou 2, dans lequel la couche de substrat (1) comprend au moins une structure d'entrée (11) qui est conçue pour faire entrer la lumière (7) de l'extérieur dans la couche de substrat (1).

4. Luminaire selon l'une des revendications précédentes, dans lequel les évidements sont entièrement remplis avec le matériau de la couche de liaison (2) et la couche limite entre la couche de liaison (2) et la couche métallique translucide (3) est lisse.

5. Luminaire selon l'une des revendications précédentes, dans lequel les structures de sortie (5) ne sont pas visibles à l'oeil nu lorsqu'aucune lumière ne sort des structures de sortie (5) et dans lequel la lumière sortant des structures de sortie (5) est visible à l'oeil nu à travers la couche métallique (3).

6. Luminaire selon l'une des revendications précédentes, dans lequel la couche de substrat transparente (1), la couche de liaison (2) et la couche métallique translucide (3) sont incurvées au moins à certains endroits.

7. Luminaire selon la revendication 6, dans lequel le rayon de courbure du cercle de courbure de la portion incurvée de la couche métallique translucide (3) est, au moins à certains endroits, inférieur à 1 m, de préférence inférieur à 50 cm, plus fortement de préférence inférieur à 30 cm et plus particulièrement de préférence inférieur à 20 cm.

8. Luminaire selon l'une des revendications précédentes, dans lequel la couche de substrat transparente (1) définit, au moins à certains endroits, un espace interne.

9. Luminaire selon la revendication 8, dans lequel la couche de substrat (1) comprend plusieurs structures d'entrée (11) qui sont disposées sur le côté opposé à la couche de liaison (2) et qui sont conçues pour faire entrer la lumière (7) de l'espace interne dans la couche de substrat (1).

10. Luminaire selon la revendication 8 ou 9, en outre avec une source de lumière (6) disposée dans l'espace interne.

11. Emballage ou récipient avec un luminaire selon l'une des revendications 1 à 7, dans lequel au moins une surface externe de l'emballage ou du récipient comprend le luminaire ou est constituée de celuici.

12. Emballage ou récipient selon la revendication 11, en outre avec une source de lumière (6), qui est conçu pour faire entrer la lumière (7) dans la couche de substrat (1) du luminaire.

13. Procédé de fabrication d'un luminaire selon l'une des revendications 1 à 10, avec les étapes suivantes :
mise à disposition d'une couche de substrat transparente (1) avec un premier indice de réfraction, dans lequel la couche de substrat (1) comprend, sur un premier côté (1a), plusieurs structures de sortie (5) qui sont conçues pour faire sortie la lumière (7, 8) se propageant à l'intérieur de la couche de substrat (1) hors de la couche de substrat (1) ;
revêtement du premier côté (1a) de la couche de substrat (1) avec une couche de liaison (2) avec un deuxième indice de réfraction différent du premier indice de réfraction ;
revêtement de la couche de liaison (2) avec une couche métallique translucide (3) par dépôt physique en phase gazeuse.

14. Procédé selon la revendication 13, dans lequel le revêtement de la couche de liaison (2) avec une couche métallique translucide (3) est effectué par pulvérisation cathodique.
